Europäisches Patentamt

European Patent Office

Office européen des brevets

(19)

(11) Publication number: **0 092 747**
**B1**

# (12) EUROPEAN PATENT SPECIFICATION

(45) Date of publication of patent specification: **15.10.86**

(51) Int. Cl.⁴: **G 06 F 3/00**

(21) Application number: **83103673.6**

(22) Date of filing: **15.04.83**

(54) **Method, auxiliary apparatus and system for colored computer graphic photography.**

(30) Priority: **15.04.82 US 368711**

(43) Date of publication of application:
**02.11.83 Bulletin 83/44**

(45) Publication of the grant of the patent:
**15.10.86 Bulletin 86/42**

(84) Designated Contracting States:
**DE FR GB IT NL**

(56) References cited:
**EP-A-0 006 161**

(73) Proprietor: **POLAROID CORPORATION**
**549 Technology Square**
**Cambridge, Massachusetts 02139 (US)**

(72) Inventor: **d'Entremont, Alice M.**
**120 Fulton Street**
**Boston Massachusetts (US)**
Inventor: **Freeman, William T.**
**5 Ellsworth Avenue**
**Cambridge Massachusetts (US)**

(74) Representative: **Feldkamp, Rainer, Dipl.-Ing.**
**et al**
**Post Office Box 920**
**D-8000 München 33 (DE)**

Courier Press, Leamington Spa, England.

## Description

The invention relates to a method for defining and photographing an image comprising the steps of defining and storing the image in a computer memory as a plurality of constant color pixel groups, visually displaying each of said constant color pixel groups at selected light color and intensity, and exposing a photosensitive material to said display, as well as an apparatus and system for performing said method.

The memory requirement for computer graphic colored images is generally determined by the spatial and color intensity resolution of the images. Thus, large computers with large memory capacities are ordinarily required for computer graphic colored images in order to store the many bits of information required to designate the brightness and color of each pixel of the image. Computer graphic images may be suitably displayed on any tube (CRT), whereupon a photograph of the displayed image may be made.

An example to such a method and system for performing the method is shown in the EP—A1—0006161. This known system uses several microcomputers in connection with a minicomputer as well as a large scale computer to provide signals to a display means which comprises a high resolution cathode ray tube, the display produced on this cathode ray tube being viewed by a camera via a color wheel comprising filters for the primary red, green and blue colors. This system is rather expensive and cannot be used with stand-alone small computers which generally do not have the memory base or the processing power to deal with images satisfactory according to this known method.

The problem to be solved by the present invention is to provide a method and apparatus utilizing a small computer and a limited computer memory for develoving computer graphic color images on a photosensitive material.

This problem is solved by the features set out in the characterizing portions of claims 1, 9 and 10.

Further, advantageous developments are indicated in the claims appended to these claims.

The method according to the invention as well as the apparatus and system for performing this method allows a substantial reduction in the memory and processing power requirements of a computer for colored graphic photography so that it is possible to use small computers which are inexpensive and still provide colored graphic photographs of excellent quality.

The method according to the invention comprises the known steps of first defining and storing within a computer memory the graphic image to be photographed as a plurality of constant color pixel groups. According to the invention, the time during which a selected photosensitive material must be exposed to a selected light color intensity for each of the constant color pixel groups is next determined. The determined exposure times are then ordered for each of the constant color pixel groups into either a progressively increasing or decreasing sequence. Each of the constant color pixel groups are thereafter visually displayed at the selected light color and intensity for its determined exposure time to the photosensitive material. The visual display may start with the first of the constant color pixel groups in the ordered sequence and thereafter at each succeeding constant color pixel group in the ordered sequence to the visual display so as to finally display all of the constant color pixel groups simultaneously in the ordered sequence when the ordered sequence comprises progressively decreasing exposure times. Alternatively, the visual display may start by simultaneously displaying all the constant color pixel groups in the ordered sequence and thereafter eliminate from the visual display each succeeding constant color pixel group in the ordered sequence though as to finally display only the last of the constant color pixel groups in the ordered sequence when the ordered sequence comprises progressively increasing exposure times.

Further details of the invention may be seen from the following description of the illustrated embodiment when read in connection with the accompaning drawings wherein:

Fig. 1 is a block diagram of a system for defining and photographing a graphic image in the manner of this invention,

Fig. 2 is a block diagram of a flow chart for the series of steps to be implemented in practicing the process of this invention,

Fig. 3 is a chart tabulating the contents of a look-up table shown in Fig. 1,

Fig. 4 is a chart tabulating the data which defines the image to be photographed by the method of this invention,

Fig. 5 is a chart tabulating data at an intermediate step in the method of this invention, and

Fig. 6 is a chart tabulating data derived in another step in the method of this invention.

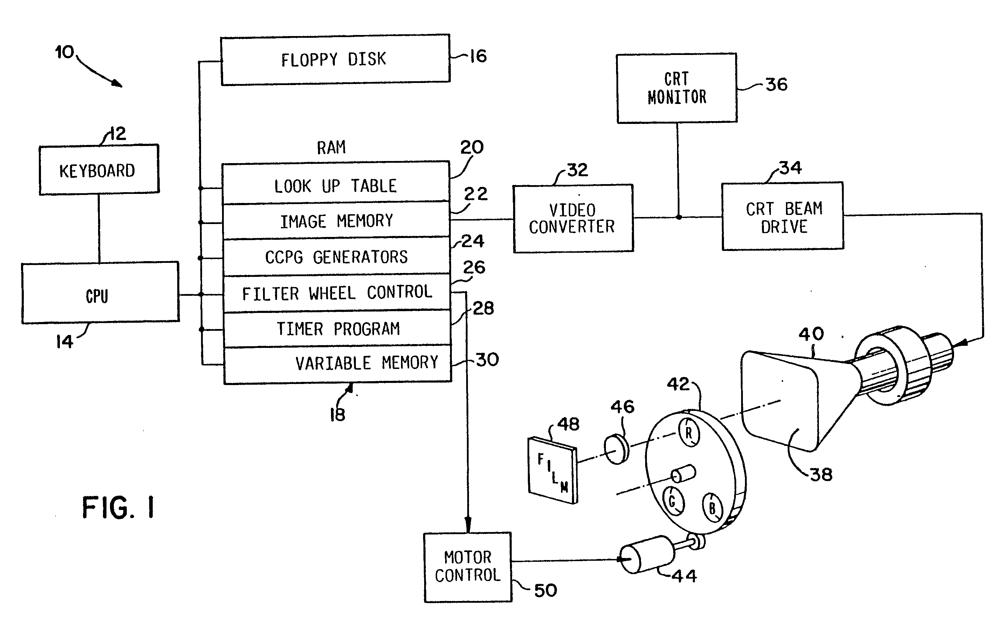

Referring to Fig. 1, there is shown a system for defining and displaying an image to be photographed in the manner of this invention. A computer system as shown generally at 10 comprises an input terminal such as a keyboard 12, a central processing unit 14 and a computer memory which may comprise an external storage medium such as a floppy disk 16 and an internal random access memory (RAM) 18. The RAM 18, in turn, comprises a look-up table 20, an image memory 22, CCPG generators 24, a filter wheel control 26, a timer program 28, and a variable memory 30. The output signal from the image memory 22 is directed to a video converter 32 which, in turn, provides an output signal to a cathode ray tube beam drive 34.

The output from the cathode ray beam drive 34, in turn, is directed to a black-and-white cathode ray tube 40 having a display screen 38 overlapped by a rotatably mounted filter wheel 42. The filter wheel 42, in turn, comprises the three primary red, green, and blue color filters each one of which may be selectively moved into overlying relationship with respect to the display screen 38 by a motor drive 44. The light from the display screen 38 is transmitted through a selected one of the red, green, and blue filters of the filter wheel 42 to a lens 46 from which it is imaged on the surface of photosensitive material as shown at 48. As will be readily understood, the cathode ray 48. As will be readily understood, the cathode ray tube 40, the filter wheel 42, the lens 46, and the photosensitive material 48 are all housed in a suitable lighttight chamber (not shown in the drawing). Motor 44, in turn, is controlled by a motor control 50 which receives an output control signal from the filter wheel control 26.

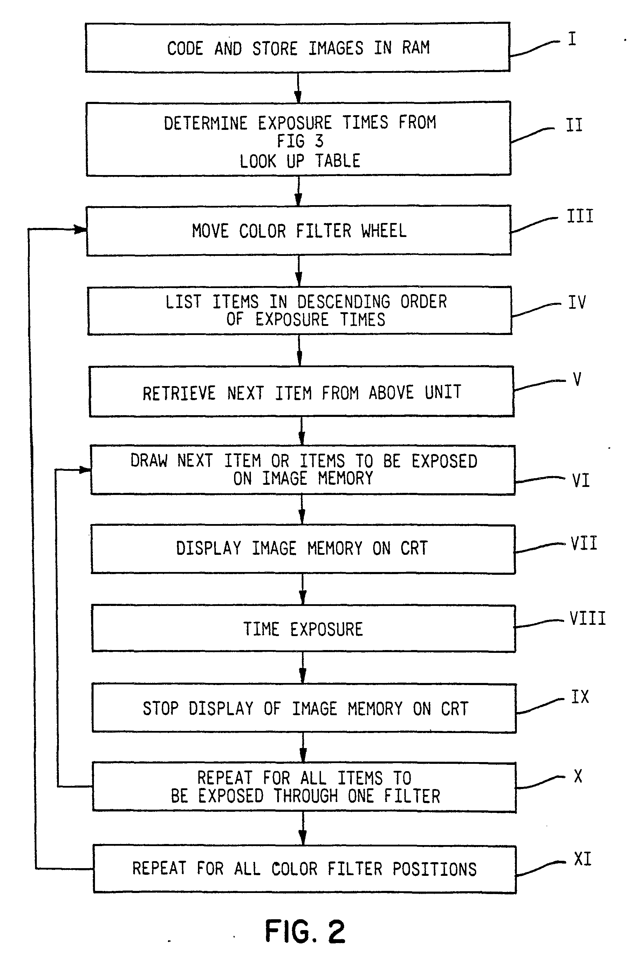

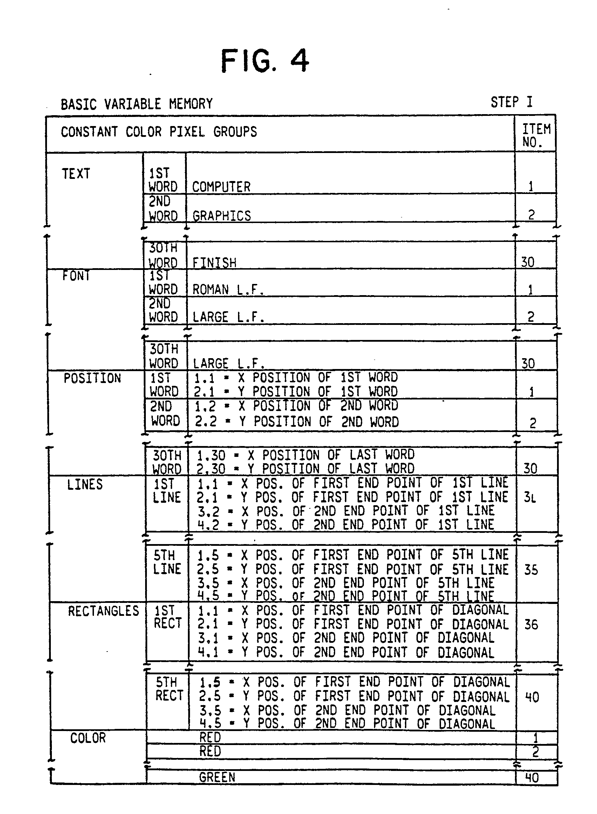

A black-and-white cathode ray tube monitor 36 is also provided for use by the system user in order to enable him to define the computer graphic image to be photographed. Thus, the system user by use of the keyboard 12 and the black-and-white monitor 36 can define what the image to be photographed is to be. The system user can define the image to be photographed by making choices from lists of options presented to him by way of program menus and questions. The program menus and questions lead the user through a series of steps which enable him to define the image in a manner as is illustrated in step I of the flow chart of FIG. 2 in conjunction with the tabulated chart of FIG. 4.

The first step that the user takes is to code and store the image to be photographed in the RAM 18 as shown by block I in the flow chart of FIG. 2. Toward this end, the user is presented with program menus and questions which allow him to proceed in the following manner. The user may first be requested to define the text of the image to be photographed in response to which he may enter by way of the keyboard 12 those words which he would wish to appear as text in the image as shown in the first part of the tabulation of FIG. 4. Thus, if the first word which the user should enter under text were "computer", and the second word "graphics" and the last word were "finish", then the basic variable memory 20 would tabulate these words as shown in FIG. 4. The user is thus able to select a maximum of thirty words of text as shown in this example which words are stored in the variable memory 30.

The user might next be asked to select a particular font for the text which he has previously entered into the variable memory 30.

The user would then enter by way of the keyboard 12 the font so selected which results would thereafter be tabulated as shown in FIG. 4 for storage in the variable memory 30. As is readily apparent, each tabulation of a particular type of font operates only to qualify a corresponding word of text and thus no new items are added to the righthand column of FIG. 4.

The user may thereafter be asked by the computer program to designate the position of each word of text to which he might respond by way of the keyboard 12 by providing the tabulated position data as shown in FIG. 4. Thus, the first word of text is located by a first set of numbers designating the x position of the first word on the moniitor 36 and a second set of numbers designating the Y position of the first word on the monitor 36. In like manner, the position of the second word is then defined by a first set of numbers designating the x position of the second word on the monitor 36 and a second set of numbers designating the y position of the second word on the monitor and so on down the list until the position of the last or thirtieth word is designated. Again, no new items are added to the righthand column of FIG. 4 since the tabulation of position data corresponds to the words of the text previously tabulated.

The user might next be asked to define any lines which he wishes to define on the image which may be utilized as part of a chart, diagram, graph, etc. The user thereafter enters by way of keyboard 12 a first set of numbers designating the x position of the first end of the first line which he wishes to define on the image. A second set of numbers is thereafter entered to define the y position of the first end point of the first line followed by a third set of numbers to designate the x position of the second end point of the first line and a fourth set of numbers to designate the y position of the second end point of the first line. This data is tabulated as shown in FIG. 4 and stored in the variable memory 30 in the aforementioned manner. As is readily apparent, only four sets of numbers are utilized to designate a straight line, and it is not necessary to store information defining each pixel of the line. Other lines may be entered in the aforementioned manner until the end points of the last or fifth line are tabulated as shown in FIG. 4.

The user may next be asked to define the rectangle to which he can respond through the keyboard 12 by entering a first set of numbers defining the x position of the first end point of the diagonal of the rectangle, a second set of numbers designating the y position of the first end point of the diagonal of the rectangle, a third set of numbers designating the x position of the second endpoint of the diagonal of the rectangle, and a fourth set of numbers designating the y position of the second endpoint of the diagonal of the rectangle as shown tabulated in FIG. 4. Again, the information taublated in FIG. 4 is stored in the variable memory 30 in the aforementioned manner. Other rectangles may be defined in the aforementioned manner with the last of the rectangles being the fifth rectangle shown tabulated in FIG. 4. Again, the rectangle may be designated by four sets of numbers in order to save computer memory capacity since it is not necessary to define each pixel in the rectangle by a tabulated data point.

The user might lastly be asked to select one color from as many as 64 different colors for each of the aforementioned items to which he would again respond by way of the keyboard to provide the color tabulation as shown in FIG. 4 which again would be stored by the variable memory 30. Since each color coresponds to a previously- identified item, there are no new items added to the righthand column of FIG. 4 by the tabulated color designations.

Although the computer program has been described as having the user first selecting all the words of text and then selecting the font, color and position for each word of text, it would be readily apparent that the program could alternatively have the user selecting each word of text and immediately after each word of text is selected, thereafter selecting the font, color and position for that word of text. It should be readily understood that the aforementioned program for user questions and his tabulated response as shown in FIG. 4 is only presented by way of example and that in actuality the user may be requested to make choices from substantially longer lists of options which may include circles, rectangles, parallelograms, lines, preselected drawings, or any other image stored as digital information. The user may additionally make graphs or charts, and any one of these items can be any color which he chooses from a preselected number of colors made available by the computer program.

Since the user must designate a particular color for each item tabulated in FIG. 4, each item having a color so designated will hereinafter be referred to as a constant color pixel group (CCPG). Thus, each rectangle or line tabulated in FIG. 4 constitutes an individual constant color pixel group (CCPG) and each word of text may also constitute a constant color pixel group (CCPG). For text, however, it may be preferable to group each line of uniformly colored text into one constant color pixel grouping (CCPG). Since the first and second words of text tabulated in FIG. 4 have been specifically designated to be red and blue, respectively, it will be appreciated that these words constitute separate and distinct constant color pixel groupings even through they might appear in the same line of the image.

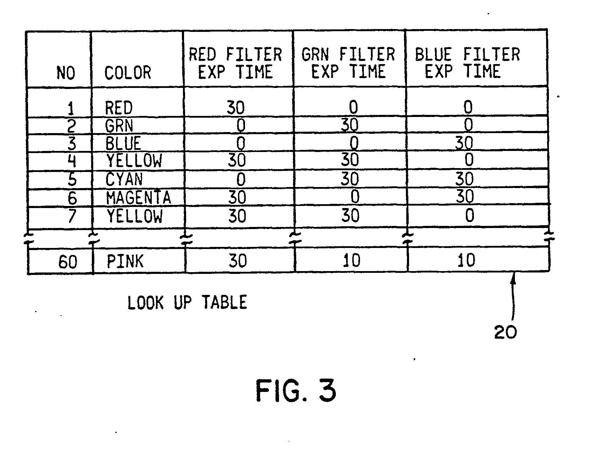

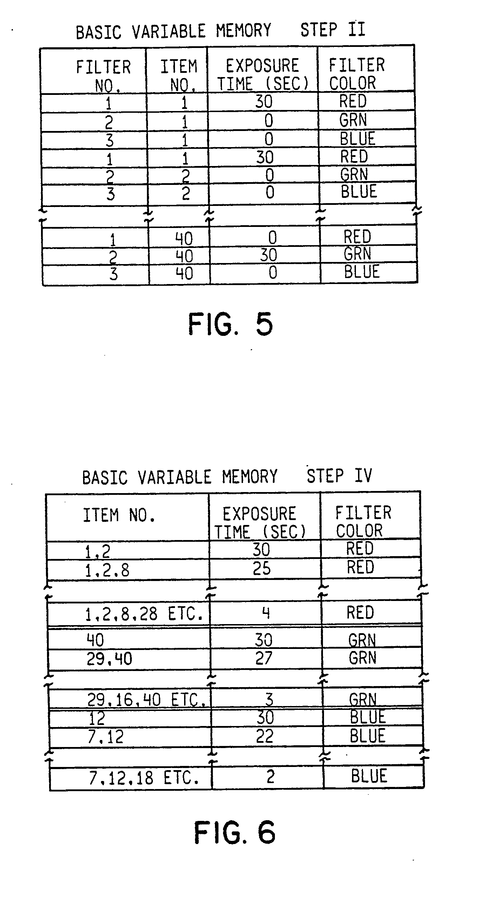

Referring now to FIG. 3, there is shown the look-up table 20 wherein each of the 64 different colors from which the user may choose to designate each constant color pixel group (CCPG) is tabulated as a fucntion of its exposure time in the three primary red, green, and blue colors for a given exposure light intensity and film speed sensitivity. Once the user has defined the image to be photographed in the aforementioned manner, the computer program implements step II as shown in the flow chart of FIG. 2 to determine the exposure times for each item or constant color pixel group (CCPG) utilizing the tabulated exposure times of FIG. 3 to provide a new tabulation of exposure times for each item (CCPG) as shown in FIG. 5 which is subsequently sotred in the variable memory 30. Thus, the exposure time for each constant color pixel group (CCPG) through each of the three primary red, green, and blue color filters is determined from the look-up table 20 by the central processing unit 14 and thereafter stored in the variable memory 30 in the form as shown in FIG. 5.

The central processing unit 14 thereafter provides a command by way of the filter wheel control 26 to the motor control 50 to, in turn, actuate the motor 44 and drive the filter wheel 42 to its starting position which as shown may be with the red filter aligned between the display screen 38 and the lens 46 as illustrated by step III in the flow chart of FIG. 2. The central processing unit 14 thereafter operates in accordance with step IV of the folw chart of FIG. 2 to sort the constant color pixel groupings (CCPG's) into a descending order of exposure times for the red filter position as shown tabulated in the upper portion of FIG. 6 which tabulation is also stored in the variable memory 30. As is readily apparent, more than one item or constant color pixel group may require the same exposure time through the red color filter as, for example, both items one and two require thirty seconds for exposure through the red color filter. Since the constant color pixel groups (CCPG's) are ordered in a progressively decreasing sequence, those items requiring the longest exposure times are included throughout the lefthand column with each succeeding item or constant color pixel group (CCPG) in the ordered sequence of exposure times being added until all the constant color pixel groups (CCPG's) requiring the least time of exposure are tabulated. Thus, for the example as shown in FIG. 6, items one and two require the longest time of exposure (thirty seconds) through the red color filter and are thus tabulated first in the ordered sequence of exposure times. Item number eight requires twenty-five seconds of exposure time through the red color filter and thus is tabulated next along with items one and two which require more than twenty-five seconds of exposure to the red color filter. The minimum exposure time required through the red color filter is four seconds, and thus all the items which require any exposure at all through the red color filter are included in this tabulation.

The central processing unit 14 implements the next step as shown in block V of the flow chart of FIG. 2 by getting the next item to be exposed from the ordered tabulation of items in FIG. 6 which for the first items in our example would be items one and two. The next step implemented by the central processing unit 14 as shown in block VI of FIG. 2 operates to set all the bits to binary logic 1's in the image memory 22 which correspond to the items to be displayed (item numbers one and two). This is accomplished by using select algorithms stored in the CCPG generators 24 in order to generate the particular items (CCPG's) to be displayed along with any other necessary inputs to these algorithms which may be stored in the variable memory 30.

The next step implemented by the central processing unit 14 as shown in block VII of the flow chart of FIG. 2 operates to display the image memory 22 to the film 48. Thus, the central processing unit 14 provides a signal by way of the video converter 32 and CRT beam drive 34 to activate the CRT 40 turning on the CRT beam to display those items (CCPG's) previously drawn to the image memory 22 in the aforementioned step VI. For the example illustrated by the tabulation of FIG. 6, items one and two are displayed on the screen 38 at a constant electron beam intensity for exposure through the red filter to the film 48. The central processing unit 14 times the exposure by way of the timer program 28 to wait for the difference between the exposure time of this group of items (CCPG's) and the exposure time of the next succeeding group of items (CCPG's) which difference for the example as shown in FIG. 6 is five seconds. Thus, the exposure is timed as shown in step VIII of FIG. 2 and thereafter ended by a stop command from the central processing unit 14 to the CRT 40 by way of the video converter 32 and CRT beam drive 34 as shown in Step IX of the flow chart of FIG. 2.

The central processing unit 14 thereafter commands a repeat of the aforementioned steps for all of the items to be exposed through the red filter as shown in step X of the flow chart of FIG. 2. The next item (CCPG) to be drawn for exposure in step VI of the flow chart of FIG. 2 in our example is item eight to which the film must be exposed for twenty-five seconds. Thus, item eight in addition to the two previously-drawn items one and two are displayed next for exposure to the film. The central processing unit 14 continues the program until those items requiring the least exposure through the red color filter are displayed on the screen 38 for the minimum exposure time which in our example from FIG. 6 is four seconds.

As is readily apparent, since the items (CCPG's) are sequentially ordered in a sequence of descending exposure times with those items (CCPG's) requiring the greatest exposure listed first, then each succeeding display on the CRT will show the previously-displayed items (CCPG's) and the exposure time for each step will be equal to the difference between the exposure time for that group of items (CCPG's) and the exposure time for the next succeeding group of items (CCPG's) on the tabulated list of FIG. 6. Once all the items (CCPG's) to which the film is to be exposed through the red filter are completed, then the aforementioned steps are repeated for all the color filter positions as shown by step XI in the flow chart of FIG. 2. Thus, the filter is moved to the next filter position which in our example is the green filter position and all the items (CCPG's) to which the film is to be exposed through the green filter are listed in descending order of exposure times as shown by the middle portion of the tabulated list in FIG. 6. The process is repeated in the aforementioned manner until all the items (CCPG's) to which the film is to be exposed through the green filter are exposed for their appropriate exposure times. Step XI of the flow chart of FIG. 2 is again repeated by the central processing unit 14 to move the filter wheel 42 so that the blue filter overlies the screen 38 whereupon the process is repeated for all the items (CCPG's) to which the film 48 is to be exposed by way of the blue filter. Thus, as is readily apparent since the electron beam intensity remains constant, the image memory 22 need only be required to store a bit of information signifying whether the electron beam is either on or off for each pixel of the image to be displayed thereby substantially reducing the heretofore required memory for such computer imaging systems.

Although step IV of the flow chart of FIG. 2 describes listing the items (CCPG's) in descending order of exposure times, it will be readily apparent that the items (CCPG's) could alternatively be listed in a progressively increasing order of exposure times so as to reverse the order of sequence as tabulated in the list of FIG. 6. In such case, all of the items (CCPG's) to be exposed to any particular filter color would be displayed first thereafter eliminating from the visual display each succeeding item (CCPG's) in the ordered sequence so as to finally display only the last of the items (CCPG's) which require the longest exposure times and which in the example shown in FIG. 6 for the red color filter would be item numbers one and two. It will also be readily apparent that although the CRT 40 is illustrated, it will be equally apparent to also utilize any light source arrangement emitting light in the red, green, and blue spectrum in place of the CRT. In addition, although the CRT 40 has been described as being controlled by the central processing unit to end the display of each group of items (CCPG's) during each incremental exposure time, it would be equally apparent that this timing function could be accomplished by an appropriate shutter arrangement timed by the central processing unit. It will also be apparent that the (CCPG's) could alternatively be generated with select electronic circuits instead of the aforementioned computer implemented algorithms.

## Claims

1. A method for defining and photographing an image comprising the steps of defining and storing the image in a computer memory as a plurality of constant color pixel groups, visually displaying each of said constant color pixel groups at a selected light color and intensity, and exposing a photosensitive material to said display, characterized in that said method comprises the additional steps of determining the time for which the photosensitive material has to be exposed at each selected light color and intensity to each of said constant color pixel groups, and ordering said constant color pixel groups into a progressively changing sequence of the times determined, and in that in said visually displaying step, each of said constant color pixel groups is, within a time substantially equal to the longest exposure time determined, visually displayed in the sequence for the exposure time determined for it.

2. The method of claim 1, characterized in that the sequence commences with the simultaneous display of all constant color pixel groups and progresses by subtracting the remaining pixel groups in the order of increasing exposure times.

3. The method of claim 1, characterized in that the sequence commences with the display of the constant color pixel group having the longest exposure time and progresses by adding the remaining pixel groups in the order of decreasing exposuure times.

4. The method of any of the claims 1 through 3, characterized in that the exposure time for each of said constant color pixel groups is determined through a look-up table stored in the computer memory.

5. The method of any of the preceding claims, wherein said light color is selected in another ordered sequence from the three primary red, green and blue colors and wherein said exposure times are determined for each of said primary red, green and blue colors for each of said constant color pixel groups.

6. The method of claim 5, characterized in that said constant color pixel groups are visually displayed on a black-and-white display screen, and in that said ordered sequence of primary colors is provided by sequentially moving red, green and blue filters over said black-and-white display screen.

7. The method of claim 6, characterized in that each of said constant color pixel groups in said ordered sequence is displayed by a control processor affirmatively setting binary logic bits in a computer image memory corresponding to the constant color pixel group to be displayed in response to selected algorithms stored in the computer memory for generating the constant color pixel groups.

8. The method of claim 6, characterized in that the exposure of the photosensitive material is terminated at least during the movement from one primary color filter over said display screen to another primary color filter over said display screen.

9. An auxilliary apparatus for use with a computer, the apparatus comprising means (40) for presenting light emitting displays for photographic recording on a selected photosensitive material (48) in operative relation with respect to the display means (40), means responsive to user controlled input signals for cooperating with the computer to define and store within the memory (18) of the computer information, indicative of the final complete image to be recorded on selected photosensitive material (48), as a plurality of constant color pixel groups, and means (32, 34) for sequentially providing a plurality of signals to the display means (40) required to display each of the constant color pixel groups, characterized in that said apparatus comprises means (20) to determine the time during which the selected photosensitive material must be exposed to light emitted from the display means (40) to record image information thereon corresponding to each of the constant color pixel groups, means (30) for ordering the determined exposure times for each of the constant color pixel groups into a progressively changing sequence of the times determined, and the means (32, 34) for sequentially providing a plurality of signals to the display mean (40) required to display each of the constant color pixel groups for its determined exposure time to the selected photosensitive material, a plurality of signals being presented to the display means (40), within a time substantially equal to the longest exposure time determined, in the sequence for the exposure time determined for the corresponding constant color pixel groups.

10. A system for defining and displaying an image for photographic reproduction comprising light emitting video display means (40) for photographic recording the image on a selected photosensitive material (48), computer means (14) responsive to user controlled input signals and a preselected program for defining and storing within a computer memory (18) the image as a plurality of constant color pixel groups, and means for controlling said video display means in response to the stored plurality of constant color pixel groups, characterized in that means (14, 20) for determining the time for which the photosensitive material (48) has to be exposed at each selected light color and intensity for each of said constant color pixel groups and means (14, 30) for ordering said constant color pixel groups into a progressively changing sequence of the times determined are provided and in that the light emitting video display means (40) are operative to display each of said constant color pixel groups, within a time substantially equal to the longest exposure time determined, in the sequence for the exposure time determined for it.

11. The system of claim 9 or 10, characterized in that the means (14, 30) for ordering said constant color pixel groups produce an ordered sequence of progressively increasing exposure times and in that said light emitting video display means (40) commences with a simultaneous display of all constant color pixel groups and progresses by subtracting the remaining pixel groups in the order of their increasing exposure times.

12. The system of claim 9 and 10, characterized in that the means (14, 30) for ordering said constant color pixel groups uses an ordered sequence of progressively decreasing exposure times, and in that the light emitting video display means (40) commences with the display of the constant color pixel group having the longest exposure time and progresses by adding the remaining pixel groups in the order of decreasing exposure times.

13. The system of any of the claims 9 through 12, characterized in that said means (14, 20) for determining the time for which the photosensitive material has to be exposed at each selected light color and intensity for each of said constant color pixel groups comprises a look-up table (20) stored in the computer memory (18).

14. The system of any of the claims 9 through 13, characterized in that said light color is selected in another ordered sequence from the three primary red, green and blue colors, and in that said means (14, 20) for determining the time determine the exposure times for each of said primary red, green and blue colors for each of said constant color pixel groups.

15. The system of any of the claims 9 through 14, characterized in that said light emitting video display means comprises a black-and-white display screen (38, 40) and in that means (44) for sequentially moving red, green and blue filters (42) over said black-and-white display screen (38, 40) are provided.

16. The system of any of the claims 9 through 15, characterized in that said computer means comprises central processing means (14) for affirmatively setting binary logic bits in a computer image memory (22) corresponding to the constant color pixel group to be displayed responsive to selected algorithms stored in the computer memory for generating the constant color pixel groups.

17. The system of claim 15, characterized by means (28) for switching off the video display (38, 40) at least during the movement from one primary color filter over said display screen (38, 40) to another primary color filter over said display screen.

**Revendications**

1. Procédé pour définir et photographier une image, comprenant les étapes consistant à définir et à stocker l'image dans une mémoire d'ordinateur sous la forme d'une pluralité de groupes constants d'éléments d'image en couleur, à afficher visuellement chacun desdits groupes constants d'éléments d'image en couleur à une couleur et à une intensité de lumière choisies, et à exposer une matière photosensible audit affichage, caractérisé en ce que ledit procédé comprend les étapes supplémentaires consistant à déterminer le temps pendant lequel la matière photosensible doit être exposée à chacun desdits groupes constants d'éléments d'image en couleur, à chaque couleur et intensité de lumière choisies, et à ordonner lesdits groupes constantes d'éléments d'image en couleur en une séquence, variant progressivement, des temps déterminés, et en ce que, au cours de ladite étape d'affichage visuel chacun desdits groupes constants d'éléments d'image en couleur aient, dans les limites d'un temps sensiblement égal au temps d'exposition le plus long déterminé, affiché visuellement dans la séquence relative au temps d'exposition déterminé pour ce groupe.

2. Procédé selon la revendication 1, caractérisé en ce que la séquence commence avec l'affichage simultané de tous les groupes constants d'éléments d'image en couleur et progresse par soustraction des groupes restant d'éléments d'image dans l'ordre des temps d'exposition croissants.

3. Procédé selon la revendication 1, caractérisé en ce que la séquence commence avec l'affichage du groupe constant d'éléments d'image en couleur présentant le temps d'exposition de plus long et progresse par addition des groupes restant d'éléments d'image dans l'ordre des temps d'exposition décroissants.

4. Procédé selon l'une quelconque des revendiations 1 à 3, caractérisé en ce que le temps d'exposition pour chacun desdits groupes constants d'éléments d'image en couleur est déterminé à l'aide d'une table de recherche stockée dans la mémoire d'ordinateur.

5. Procédé selon l'une quelconque des revendications précédentes, dans lequel ladite couleur de lumière est choisie au cours d'une autre séquence ordonnée parmi les trois couleurs primaires, rouge, verte et bleue et dans lequel lesdits temps d'exposition sont déterminés, en ce qui concerne chacune desdites couleurs primaires rouge, verte et bleue, pour chacun desdits groupes constants d'éléments d'image en couleur.

6. Procédé selon la revendication 5, caractérisé en ce que lesdits groupes constants d'éléments d'image en couleur sont affichés visuellement sur un écran d'affichage en noir et blanc et en ce que l'on obtient ladite séquence ordonnée de couleurs primaires en déplaçant séquentiellement des filtres rouge, vert et bleu sur ledit écran d'affichage en noir et blanc.

7. Procédé selon la revendication 6, caractérisé en ce que chacun desdits groupes constants d'éléments d'image en couleur de ladite séquence ordonnée est affiché par un processeur de commande établissant de façon affirmative dans une mémoire d'image d'ordinateur des bits logiques binaires correspondant au groupe constant d'éléments d'image en couleur à afficher en réponse à des algorithmes choisis stockés dans la mémoire d'ordinateur pour engendrer les groupes constants d'éléments d'image en couleur.

8. Procédé selon la revendication 6, caractérisé en ce que l'exposition de la matière photosensible se termine au moins pendant de déplacement depuis un des filtres de couleur primaire sur ledit écran d'affichage jusqu'à un autre filtre de couleur primaire sur ledit écran d'affichage.

9. Appareil auxiliaire destiné à être utilisé avec un ordinateur, l'appareil comprenant un moyen (40) pour présenter des affichages émetteurs de lumière pour un enregistrement photographique sur une matière photosensible choisie (48) dans une disposition de relation fonctionnelle vis à vis du moyen d'affichage (40), un moyen réagissant à des signaux d'entrée commandés par un utilisateur en coopérant avec l'ordinateur de manière à définir et à stocker dans la mémoire (18) de cet ordinateur des informations représentant l'image complète finale à enregistrer sur la matière photosensible choisie (48), sous forme d'une pluralité de groupes constants d'éléments d'image en couleur, et un moyen (32, 34) pour fournir de façon séquentielle au moyen d'affichage (40) une pluralité de signaux nécessaires pour afficher chacun des groupes constants d'éléments d'image en couleur, caractérisé en ce que ledit appareil comprend un moyen (20) pour déterminer le temps durant lequel la matière photosensible choisie doit être exposée à la lumière émise par le moyen d'affichage (40) pour enregistrer sur cette matière des informations d'image correspondant à chacun des groupes constants d'éléments d'image en couleur, un moyen (30) pour ordonner les temps d'exposition déterminés relatifs à chacun des groupes constants d'éléments d'image en couleur en une séquence progressivement variable des temps déterminés, et les moyens (32, 34) pour fournir au moyen d'affichage (40) une pluralité de signaux nécessaires pour afficher chacun des groupes constants d'éléments d'image en couleur pendant son temps d'exposition déterminé pour la matière photosensité choisie, une pluralité de signaux étant présentée au moyen d'affichage (40), pendant un temps sensiblement égal au temps d'exposition le plus long déterminé, au cours de la séquence relative au temps d'exposition déterminé pour les groupes constants correspondants d'éléments d'image en couleur.

10. Système pour définir et afficher une image en vue d'une reproduction photographique, comprenant un moyen (40) d'affichage vidéo émettant de la lumière pour enregistrer photographiquement l'image sur une matière photosensible choisie (48), un ordinateur (14) réagissant à des signaux d'entrée commandés par un utilisateur et par un programme choisi préalablement en définissant et en stockant dans une mémoire (18) d'ordinateur l'image sous forme d'une pluralité de groupes constants d'éléments d'image en couleur, et un moyen pour commander ledit moyen d'affichage vidéo en réponse à la pluralité stockée de groupes constants d'éléments d'image en couleur, caractérisé en ce qu'il comprend un moyen (14, 20) poue déterminer le temps durant lequel la matière photosensible (48) doit être à chaque couleur et intensité de lumière choisie pour chacun desdits groupes constants d'éléments d'image en couleur et un moyen (14, 30) pour ordonner lesdits groupes constants d'éléments d'image en couleur en une séquence progressivement variable des temps déterminés et en ce que le moyen (40) d'affichage vidéo émetteur de lumière fonctionne de manière à afficher chacun desdit groupes constants d'éléments d'image en couleur, dans la limite d'un temps sensiblement égal au temps d'exposition le plus long déterminé, dans la séquence relative au temps d'exposition déterminé pour ce groupe.

11. Système selon la revendication 9 ou 10 caractérisé en ce que le moyen (14, 30) pour ordonner lesdits groupes constants d'éléments d'image en couleur produit une séquence ordonnée de temps d'exposition progressivement croissant et en ce que ledit moyen (40) d'affichage vidéo émetteur de lumière commence avec un affichage simultané de tous les groupes constants d'éléments d'image en couleur et progresse par soustraction des groupes restant d'éléments d'image dans l'ordre de leur temps d'exposition croissant.

12. Système selon les revendications 9 et 10, caractérisé en ce que le moyen (14, 30) pour ordonner lesdits groupes constants d'éléments d'image en couleur utilise une séquence ordonnée de temps d'exposition progressivement décroissant et en ce que le moyen (40) d'affichage vidéo émetteur de lumière commence avec l'affichage du groupe constant d'éléments d'image en couleur présentant le temps d'exposition le plus long et progresse par addition des groupes restant d'éléments d'image dans l'ordre des temps d'exposition décroissant.

13. Système selon l'une quelconque des revendications 9 à 12, caractérisé en ce que ledit moyen (14, 20) pour déterminer le temps durant lequel la matière photosensible doit être exposée à chaque couleur et intensité de lumière choisies pour chacun desdits groupes constants d'éléments d'image en couleur comprend une table de recherche (20) stockée dans la mémoire (18) d'ordinateur.

14. Système selon l'une quelconque des revendications 9 à 13, caractérisé en ce que ladite couleur de lumière est choisie suivant une autre séquence ordonnée parmi les trois couleurs primaires rouge, verte et bleue et en ce que ledit moyen (14, 20) pour déterminer le temps détermine les temps d'exposition relatifs à chacune desdites couleurs primaires rouge, vert et bleue pour chacun desdits groupes constants d'éléments d'image en couleur.

15. Système selon l'une quelconque des revendications 9 à 14, caractérisé en ce que ledit moyen d'affichage vidéo émetteur de lumière comprend un écran (38, 40) d'affichage en noir et blanc, et en ce qu'un moyen (44) pour déplacer séquentiellement des filtres (42) rouge, vert et bleu sur ledit écran (38, 40) d'affichage en noir et blanc est présent.

16. Système selon l'une quelconque des revendications 9 à 15, caractérisé en ce que l'ordinateur précité comprend un moyen de traitement central (14) pour établir de façon affirmative dans une mémoire d'image (22) d'ordinateur des bits logiques binaires correspondant au groupe constant d'éléments d'image en couleur à afficher en réponse à des algorithmes choisis stockés dans la mémoire d'ordinateur pour engendrer les groupes constants d'éléments d'image en couleur.

17. Système selon la revendication 15, caractérisé par un moyen (28) pour mettre hors fonction l'affichage vidéo (38, 40) au moins pendant le déplacement depuis l'un des filtres de couleur primaire sur ledit écran d'affichage (38, 40) jusqu'à un autre filtre de couleur primaire sur ledit écran d'affichage.

**Patentansprüche**

1. Verfahren zum Definieren und Photographieren eines Bildes, das die Schritte der Definition und Speicherung des Bildes in einem Computerspeicher als Vielzahl von Pixelgruppen konstanter Farbe, die optische Anzeige jeder der Pixelgruppen konstanter Farbe mit einer ausgewählten Lichtfarbe und Intensität und die Belichtung eines photoempfindlichen Materials mit der Anzeige umfaßt, dadurch gekennzeichnet, daß das Verfahren die zusätzlichen Schritte der Ermittlung der Zeit, über die das lichtempfindliche Material bei jeder ausgewählten Lichtfarbe und Intensität mit jeder der Pixelgruppen konstanter Farbe zu belichten ist, und der Einordnung der Pixelgruppen konstanter Farbe in eine sich progressiv ändernde Folge der ermittelten Zeiten umfaßt, und daß in dem Schritt der optischen Anzeige innerhalb einer Zeit, die im wesentlichen gleich der längsten ermittelten Belichtungszeit ist, jede der Pixelgruppen konstanter Farbe in der Folge der hierfür ermittelten Belichtungszeit optisch angezeigt wird.

2. Verfahren nach Anspruch 1, dadurch gekennzeichnet, daß die Folge mit der gleichzeitigen Anzeige aller Pixelgruppen konstanter Farbe beginnt und mit einem Abziehen der übrigen Pixelgruppen in der Folge von sich vergrößernden Belichtungszeiten fortschreitet.

3. Verfahren nach Anspruch 1, dadurch gekennzeichnet, daß die Folge mit der Darstellung der Pixelgruppe konstanter Farbe beginnt, die die längste Belichtungszeit aufweist, und unter Hinzufügen der übrigen Pixelgruppen in der Folge von abnehmenden Belichtungszeiten fortschreitet.

4. Verfahren nach einem der Ansprüche 1—3, dadurch gekennzeichnet, daß die Belichtungszeit für jede der Pixelgruppen konstanter Farbe über eine Nachschlagtabelle ermittelt wird, die in dem Computerspeicher gespeichert ist.

5. Verfahren nach einem der vorhergehenden Ansprüche, bei dem die Lichtfarbe in einer weiteren geordneten Folge aus den drei primären Rot-, Grün- und Blau-Farben ausgewählt ist, und bei dem die Belichtungszeiten für jede der primären Rot-, Grün- und Blau-Farben für jede der Pixelgruppen konstanter Farbe ermittelt werden.

6. Verfahren nach Anspruch 5, dadurch gekennzeichnet, daß die Pixelgruppen konstanter Farbe optisch auf einem Schwarz-Weiß-Anzeigebildschirm angezeigt werden und daß die geordnete Folge der Primärfarben durch aufeinanderfolgendes Bewegen von roten, grünen und blauen Filtern über den Schwarz-Weiß-Anzeigebildschirm erzielt wird.

7. Verfahren nach Anspruch 6, dadurch gekennzeichnet, daß jede der Pixelgruppen konstanter Farbe in der geordneten Folge durch einen Steuerprozessor angezeigt wird, der in eindeutiger Weise binäre Logik-Bits in einem Computer-Bildspeicher entsprechend der Pixelgruppe konstanter Farbe setzt, die in Abhängigkeit von ausgewählten Algorithmen angezeigt wird, die in dem Computerspeicher zur Erzeugung der Pixelgruppen konstanter Farbe gespeichert sind.

8. Verfahren nach Anspruch 6, dadurch gekennzeichnet, daß die Belichtung des lichtempfindlichen Materials zumindestens während der Bewegung von einem Primärfarbenfilter über den Anzeigebildschirm zu einem anderen Primärfarbenfilter über dem Anzeigebildschirm beendet wird.

9. Zusatzvorrichtung zur Verwendung mit einem Computer, wobei die Vorrichtung Einrichtungen (40) zur Lieferung lichtemittierender Anzeigen für eine photographische Aufzeichnung auf einem ausgewählten lichtempfindlichen Material (48) in betriebsmäßiger Beziehung bezüglich der Anzeigeeinrichtungen (40), Einrichtungen, die auf vom Benutzer gesteuerte Eingangssignale ansprechen und mit dem Computer zusammenwirken, um in dem Speicher (18) des Computers Informationen zu definieren und zu speichern, die das abschließende vollständige Bild darstellen, das auf ausgewähltem photoempfindlichem Material (48) aufgezeichnet werden soll, und Einrichtungen (32, 34) zur aufeinanderfolgenden Lieferung einer Vielzahl von Signalen an die Anzeigeeinrichtungen (40) umfaßt, die erforderlich sind, um jede der Pixelgruppen konstanter Farbe darzustellen, dadurch gekennzeichnet, daß die Vorrichtung Einrichtungen (20) zur Ermittlung der Zeit, über die das ausgewählte lichtempfindliche Material mit dem Licht belichtet werden muß, das von den Anzeigeeinrichtungen (40) emittiert wird, um auf dem lichtempfindlichen Material Bildinformationen Aufzuzeichnen, die jeder der Pixelgruppen konstanter Farbe entsprechen, Einrichtungen (30) zum Einordnen der so ermittelten Belichtungszeiten für jede der Pixelgruppen konstanter Farbe in eine sich progressiv ändernde Folge der so ermittelten Zeiten und die Einrichtungen (32, 34) zur aufeinanderfolgenden Zuführung einer Vielzahl von Signalen an die Anzeigeeinrichtungen (40) umfaßt, die erforderlich sind, um jede der Pixelgruppen konstanter Farbe für die ermittelte Belichtungszeit des ausgewählten lichtempfindlichen Materials anzuzeigen, wobei eine Vielzahl von Signalen den Anzeigeeinrichtungen (40) innerhalb einer Zeit, die im wesentlichen gleich der längsten ermittelten Belichtungszeit ist, in der Folge der Belichtungszeit zugeführt wird, die für die entsprechenden Pixelgruppen konstanter Farbe ermittelt wurde.

10. System zur Definition und Anzeige eines Bildes für eine photographische Wiedergabe, mit lichtemittierenden Video-Anzeigeeinrichtungen (40) zur photographischen Aufzeichnung des Bildes auf einem ausgewählten lichtempfindlichen Material (48), mit Computereinrichtungen (14), die auf vom Benutzer gesteuerte Eingangssignale und ein vorher ausgewähltes Programm ansprechen, um das Bild innerhalb eines Computerspeichers (18) in Form einer Vielzahl von Pixelgruppen konstanter Farbe zu definieren und zu speichern, und mit Einrichtungen zur Steuerung der Videoanzeigeeinrichtungen in Abhängigkeit von der gespeicherten Vielzahl von Pixelgruppen konstanter Farbe, dadurch gekennzeichnet, daß Einrichtungen (14, 20) zur Ermittlung der Zeit, über die das lichtempfindliche Material (48) mit jeder ausgewählten Lichtfarbe und Intensität für jede der Pixelgruppen konstanter Farbe belichtet werden muß, und Einrichtungen (14, 30) zum Einordnen der Pixelgruppen konstanter Farbe in eine sich progressiv ändernde Folge der ermittelten Zeiten vorgesehen sind und daß die lichtemittierenden Videoanzeigeeinrichtungen (40) eine Anzeige der Pixelgruppen konstanter Farbe innerhalb einer Zeit, die im wesentlichen gleich der längsten ermittelten Belichtungszeit ist, in der Folge der hierfür ermittelten Belichtungszeit bewirken.

11. System nach Anspruch 9 oder 10, dadurch gekennzeichnet, daß die Einrichtungen (14, 30) zum Einordnen der Pixelgruppen konstanter Farbe eine geordnete Folge von sich progressiv vergrößernden Belichtungszeiten erzeugen und daß die lichtemittierenden Video-Anzeigeeinrichtungen (40) mit einer gleichzeitigen Anzeige aller Pixelgruppen konstanter Farbe beginnen und fortschreitend die übrigen Pixelgruppen in der Reihenfolge ihrer zunehmenden Belichtungszeiten abziehen.

12. System nach Anspruch 9 und 10, dadurch gekennzeichnet, daß die Einrichtungen (14, 30) zum Einordnen der Pixelgruppen konstanter Farbe eine geordnete Folge von progressiv abnehmenden Belichtungszeiten verwenden und daß die lichtemittierenden Videoanzeigeeinrichtungen (40) mit der Anzeige der konstanten Pixelgruppe, die die längste Belichtungszeit aufweist, beginnen und unter Hinzufügen der übrigen Pixelgruppen in der Reihenfolge abnehmender Belichtungszeiten fortschreiten.

13. System nach einem der Ansprüche 9—12, dadurch gekennzeichnet, daß die Einrichtungen (14, 20) zur Ermittlung der Zeit, über die das lichtempfindliche Material mit jeder ausgewählten Lichtfarbe und Intensität für jede der Pixelgruppen konstanter Farbe belichtet werden muß, eine Nachschlagtabelle (20) umfassen, die in dem Computerspeicher (18) gespeichert ist.

14. System nach einem der Ansprüche 9—13, dadurch gekennzeichnet, daß die Lichtfarbe in einer weiteren geordneten Folge aus den drei Rot-, Grün- und Blau-Primärfarben ausgewählt ist und daß die Einrichtungen (14, 20) zur Ermittlung der Zeit die Belichtungszeiten für jede der Rot-, Grün- und Blau-Primärfarben für jede der Pixelgruppen konstanter Farbe ermitteln.

15. System nach einem der Ansprüche 9—14, dadurch gekennzeichnet, daß die lichtemittierenden Video-Anzeigeeinrichtungen einen Schwarz-Weiß-Anzeigebildschirm (38, 40) umfassen und daß Einrichtungen (44) zur aufeinanderfolgenden Bewegung von roten, grünen und blauen Filtern (42) über den Schwarz-Weiß-Anzeigebildschirm vorgesehen sind.

16. System nach einem der Ansprüche 9—15, dadurch gekennzeichnet, daß die Computereinrichtungen zentrale Prozessoreinrichtungen (14) zum eindeutigen Setzen von binären Logik-Bits in einem Computer-Bildspeicher (22) umfassen, die der anzuzeigenden Pixelgruppe konstanter Farbe in Abhängigkeit von augewählten Algorithmen entsprechen, die in dem Computerspeicher zur Erzeugung der Pixelgruppen konstanter Farbe gespeichert sind.

17. System nach Anspruch 15, gekennzeichnet durch Einrichtungen (28) zum Abschalten des Video-Anzeigebildschirms (38, 40) zumindest während der Bewegung von einem Primärfarbenfilter über den Anzeigebildschirm (38, 40) zu einem anderen Primärfarbenfilter über den Anzeigebildschirm.

FIG. 1

| | |
|---|---|
| CODE AND STORE IMAGES IN RAM | I |
| DETERMINE EXPOSURE TIMES FROM FIG 3 LOOK UP TABLE | II |
| MOVE COLOR FILTER WHEEL | III |
| LIST ITEMS IN DESCENDING ORDER OF EXPOSURE TIMES | IV |
| RETRIEVE NEXT ITEM FROM ABOVE UNIT | V |
| DRAW NEXT ITEM OR ITEMS TO BE EXPOSED ON IMAGE MEMORY | VI |
| DISPLAY IMAGE MEMORY ON CRT | VII |
| TIME EXPOSURE | VIII |
| STOP DISPLAY OF IMAGE MEMORY ON CRT | IX |
| REPEAT FOR ALL ITEMS TO BE EXPOSED THROUGH ONE FILTER | X |
| REPEAT FOR ALL COLOR FILTER POSITIONS | XI |

## FIG. 2

| NO | COLOR | RED FILTER EXP TIME | GRN FILTER EXP TIME | BLUE FILTER EXP TIME |
|---|---|---|---|---|
| 1 | RED | 30 | 0 | 0 |
| 2 | GRN | 0 | 30 | 0 |
| 3 | BLUE | 0 | 0 | 30 |
| 4 | YELLOW | 30 | 30 | 0 |
| 5 | CYAN | 0 | 30 | 30 |
| 6 | MAGENTA | 30 | 0 | 30 |
| 7 | YELLOW | 30 | 30 | 0 |
| 60 | PINK | 30 | 10 | 10 |

LOOK UP TABLE

20

# FIG. 3

3

# FIG. 4

BASIC VARIABLE MEMORY                                     STEP I

| CONSTANT COLOR PIXEL GROUPS | | | ITEM NO. |
|---|---|---|---|
| TEXT | 1ST WORD | COMPUTER | 1 |
| | 2ND WORD | GRAPHICS | 2 |
| | 30TH WORD | FINISH | 30 |
| FONT | 1ST WORD | ROMAN L.F. | 1 |
| | 2ND WORD | LARGE L.F. | 2 |
| | 30TH WORD | LARGE L.F. | 30 |
| POSITION | 1ST WORD | 1.1 = X POSITION OF 1ST WORD<br>2.1 = Y POSITION OF 1ST WORD | 1 |
| | 2ND WORD | 1.2 = X POSITION OF 2ND WORD<br>2.2 = Y POSITION OF 2ND WORD | 2 |
| | 30TH WORD | 1.30 = X POSITION OF LAST WORD<br>2.30 = Y POSITION OF LAST WORD | 30 |
| LINES | 1ST LINE | 1.1 = X POS. OF FIRST END POINT OF 1ST LINE<br>2.1 = Y POS. OF FIRST END POINT OF 1ST LINE<br>3.2 = X POS. OF 2ND END POINT OF 1ST LINE<br>4.2 = Y POS. OF 2ND END POINT OF 1ST LINE | 3L |
| | 5TH LINE | 1.5 = X POS. OF FIRST END POINT OF 5TH LINE<br>2.5 = Y POS. OF FIRST END POINT OF 5TH LINE<br>3.5 = X POS. OF 2ND END POINT OF 5TH LINE<br>4.5 = Y POS. OF 2ND END POINT OF 5TH LINE | 35 |
| RECTANGLES | 1ST RECT | 1.1 = X POS. OF FIRST END POINT OF DIAGONAL<br>2.1 = Y POS. OF FIRST END POINT OF DIAGONAL<br>3.1 = X POS. OF 2ND END POINT OF DIAGONAL<br>4.1 = Y POS. OF 2ND END POINT OF DIAGONAL | 36 |
| | 5TH RECT | 1.5 = X POS. OF FIRST END POINT OF DIAGONAL<br>2.5 = Y POS. OF FIRST END POINT OF DIAGONAL<br>3.5 = X POS. OF 2ND END POINT OF DIAGONAL<br>4.5 = Y POS. OF 2ND END POINT OF DIAGONAL | 40 |
| COLOR | | RED | 1 |
| | | RED | 2 |
| | | GREEN | 40 |

BASIC VARIABLE MEMORY   STEP II

| FILTER NO. | ITEM NO. | EXPOSURE TIME (SEC) | FILTER COLOR |
|---|---|---|---|
| 1 | 1 | 30 | RED |
| 2 | 1 | 0 | GRN |
| 3 | 1 | 0 | BLUE |
| 1 | 1 | 30 | RED |
| 2 | 2 | 0 | GRN |
| 3 | 2 | 0 | BLUE |
| 1 | 40 | 0 | RED |
| 2 | 40 | 30 | GRN |
| 3 | 40 | 0 | BLUE |

# FIG. 5

BASIC VARIABLE MEMORY   STEP IV

| ITEM NO. | EXPOSURE TIME (SEC) | FILTER COLOR |
|---|---|---|
| 1,2 | 30 | RED |
| 1,2,8 | 25 | RED |
| 1,2,8,28 ETC. | 4 | RED |
| 40 | 30 | GRN |
| 29,40 | 27 | GRN |
| 29,16,40 ETC. | 3 | GRN |
| 12 | 30 | BLUE |
| 7,12 | 22 | BLUE |
| 7,12,18 ETC. | 2 | BLUE |

# FIG. 6